# EUROPÄISCHE PATENTSCHRIFT

(11) **EP 3 865 915 B1**
(45) Veröffentlichungstag und Bekanntmachung des Hinweises auf die Patenterteilung: **07.05.2025**
(21) Anmeldenummer: 20156875.5
(22) Anmeldetag: 12.02.2020
(51) Int. Cl.: G01S 19/48, G01C 21/00, G01C 21/16

(54) **POSITIONSSCHÄTZUNG IN UNTERSCHIEDLICHEN KOORDINATENSYSTEMEN**
POSITION ESTIMATION IN DIFFERENT COORDINATE SYSTEMS
ESTIMATION DE LA POSITION DANS DIFFÉRENTS SYSTÈMES DE COORDONNÉES

(43) Veröffentlichungstag der Anmeldung: 18.08.2021
(73) Patentinhaber: Elektrobit Automotive GmbH, 91058 Erlangen (DE)
(72) Erfinder: Schauer, Martin, 65824 Schwalbach a. Ts. (DE); Kraus, Manuel, 65824 Schwalbach a. Ts. (DE); Patino Studencki, Lucila, 65824 Schwalbach a. Ts. (DE); Siller, Christian, 65824 Schwalbach a. Ts. (DE); Pfeuffer, Christian, 65824 Schwalbach a. Ts. (DE); Nippe, Martin, 65824 Schwalbach a. Ts. (DE); Baleghkalam, Ghazaleh, 65824 Schwalbach a. Ts. (DE); Ohl, Sebastian, 65824 Schwalbach a. Ts. (DE)
(74) Vertreter: Continental Corporation

(56) Entgegenhaltungen:
- DE-A1- 102015 217 497
- DE-A1- 102017 200 234
- DE-A1- 102018 207 857
- US-A1- 2018 031 387

## Beschreibung

Die vorliegende Erfindung betrifft ein Verfahren, ein Computerprogramm mit Instruktionen und eine Vorrichtung zur Positionsschätzung, insbesondere zur gleichzeitigen Positionsschätzung in zumindest zwei Koordinatensystemen.

In einem Landfahrzeug werden für eine Reihe von Anwendungen, insbesondere im Umfeld von Fahrerassistenzsystemen und hochautomatisiertem Fahren, Positionsschätzungen benötigt. Dabei müssen die Positionsschätzungen für die Anwendungen zum Teil verschiedene Qualitäten aufweisen.

Beispielsweise benötigen Algorithmen, die das Fahrverhalten selbständig regeln, glatte Trajektorien und Bewegungsinformationen. Für solche Algorithmen ist die kurzfristige Stabilität wichtig, wohingegen eine langfristige Drift tolerierbar ist. Eine absolute Positionsinformation ist nicht notwendig. Es handelt sich hier also um ein relatives lokales Koordinatensystem.

Algorithmen, die selbständig eine Karte der Umgebung erstellen oder Daten aus speziell angefertigten lokalen Karten verwenden, benötigen eine genaue Kenntnis der Position in dieser Umgebung. Die langfristige Drift muss in diesem Fall ausgeglichen werden. Hierbei handelt es sich also um ein absolutes lokales Koordinatensystem.

Algorithmen, die die Position des Fahrzeugs auf dem Erdball benötigen, z.B. für einen Kartenabgleich, brauchen ebendiese Information. Auch hier wird die langfristige Drift ausgeglichen. Das Koordinatensystem ist also ein absolutes globales.

Beispielsweise beschreibt US 2018/0031387 A1 ein System zur Zustandsschätzung, das visuelle Stereo-Odometrie mit großer Reichweite nutzt und GPS-, Barometer- und Inertialmessungen integriert. Das System besteht aus zwei Hauptbestandteilen, einem EKF (Erweitertes Kalman Filter) und einer visuellen Odometrie. Für die visuelle Odometrie verwendet das System die EKF-Informationen für eine robuste Verfolgung der Kameraposition. Die Ausgaben der visuellen Odometrie dienen als Messwerte für die EKF-Zustandsaktualisierung.

DE 10 2017 200 234 A1 beschreibt ein Verfahren zum Referenzieren einer lokalen Trajektorie in einem globalen Koordinatensystem, wobei die lokale Trajektorie geordnete lokale Positionen in einem lokalen Koordinatensystem umfasst.

DE 10 2018 207 857 A1 beschreibt ein Verfahren zum Transformieren einer Position eines Fahrzeugs zwischen einem ersten Koordinatensystem und einem zweiten Koordinatensystem.

DE 10 2015 217 497 A1 beschreibt ein Verfahren zum Synchronisieren einer ersten lokalen Umfeldkarte mit einer zweiten lokalen Umfeldkarte in einem Umfeld eines Kraftfahrzeugs.

Die Positionsberechnung bzw. -schätzung erfolgt für die verschiedenen Anwendungen somit in unterschiedlichen Koordinatensystemen, von denen jedes für sich allein betrachtet Eigenschaften aufweist, die unterschiedliche Anforderungen erfüllen. Die gleichzeitige vollständige Berechnung von Positionen in mehreren Koordinatensystemen ist allerdings laufzeitintensiv, sodass ein leistungsfähiger und damit teurer Rechner vorhanden sein muss. Die Anforderungen an die verfügbare Rechenleistung lassen sich reduzieren, indem Vereinfachungen eingeführt werden. Beispielsweise wird auf eine korrekte Schätzung der Kovarianzen verzichtet oder es wird die Bedingung der Glattheit der relativen Trajektorie aufgeweicht.

Es ist eine Aufgabe der vorliegenden Erfindung, Lösungen für eine verbesserte Positionsschätzung in zumindest zwei Koordinatensystemen bereitzustellen.

Diese Aufgabe wird durch ein Verfahren zur Positionsschätzung mit den Merkmalen des Anspruchs 1, durch ein Computerprogramm mit Instruktionen mit den Merkmalen des Anspruchs 5 und durch eine Vorrichtung zur Positionsschätzung mit den Merkmalen des Anspruchs 6 gelöst. Bevorzugte Ausgestaltungen der Erfindung sind Gegenstand der abhängigen Ansprüche.

Gemäß einem ersten Aspekt der Erfindung umfasst ein Verfahren zur Positionsschätzung in zumindest zwei Koordinatensystemen die Schritte:
- Empfangen von Sensordaten für eine Positionsschätzung in einem relativen lokalen ersten Koordinatensystem;
- Durchführen einer Positionsschätzung im ersten Koordinatensystem unter Verwendung der Sensordaten;
- Bereitstellen von aus der Positionsschätzung resultierenden Positionsinformationen aus dem ersten Koordinatensystem für eine Positionsschätzung in einem absoluten globalen zweiten Koordinatensystem;
- Fusionieren von Daten eines globalen Navigationssatellitensystems sowie der bereitgestellten Positionsinformationen in eine Positionsschätzung im zweiten Koordinatensystem;
- Bestimmen von Korrelationen zwischen Zuständen für zwei Zeitpunkte, wobei für das Bestimmen der Korrelationen ein Zustandsklon eines im zweiten Koordinatensystem gemessenen Zustands im ersten Koordinatensystem generiert wird; und
- Ausgeben von Positionsschätzungen (LP, GP) im ersten Koordinatensystem und im zweiten Koordinatensystem an zumindest eine externe Applikation.

Gemäß einem weiteren Aspekt der Erfindung umfasst ein Computerprogramm Instruktionen, die bei Ausführung durch einen Computer den Computer zur Ausführung der Schritte eines Verfahrens gemäß Anspruch 1 veranlassen.

Der Begriff Computer ist dabei breit zu verstehen. Insbesondere umfasst er auch Steuergeräte, Controller, eingebettete Systeme und andere prozessorbasierte Datenverarbeitungsvorrichtungen.

Das Computerprogramm kann beispielsweise für einen elektronischen Abruf bereitgestellt werden oder auf einem computerlesbaren Speichermedium gespeichert sein.

Gemäß einem weiteren Aspekt der Erfindung weist eine Vorrichtung zur Positionsschätzung in zumindest zwei Koordinatensystemen auf:
- eine Empfangseinheit zum Empfangen von Sensordaten für eine Positionsschätzung in einem relativen lokalen ersten Koordinatensystem;
- einen ersten Positionsschätzer zum Durchführen einer Positionsschätzung im ersten Koordinatensystem unter Verwendung der Sensordaten und zum Bereitstellen von aus der Positionsschätzung resultierenden Positionsinformationen aus dem ersten Koordinatensystem für eine Positionsschätzung in einem absoluten globalen zweiten Koordinatensystem;
- einen zweiten Positionsschätzer zum Fusionieren von Daten eines globalen Navigationssatellitensystems sowie der bereitgestellten Positionsinformationen in eine Positionsschätzung im zweiten Koordinatensystem;
wobei Korrelationen zwischen Zuständen für zwei Zeitpunkte bestimmt werden, wobei für das Bestimmen der Korrelationen ein Zustandsklon eines im zweiten Koordinatensystem gemessenen Zustands im ersten Koordinatensystem generiert wird; und
- einem Ausgang (27) zum Ausgeben von Positionsschätzungen (LP, GP) im ersten Koordinatensystem und im zweiten Koordinatensystem an zumindest eine externe Applikation.

Bei der erfindungsgemäßen Lösung ist die gleichzeitige Positionsschätzung in verschiedenen Koordinatensystemen derart aufgebaut, dass für zumindest ein Koordinatensystem eine Weiterverarbeitung der Ergebnisse der Positionsschätzung aus einem anderen Koordinatensystem erfolgt, d.h. es werden vorherige Ergebnisse verwendet. Auf diese Weise können nicht notwendige redundante Berechnungen entfallen. Die erfindungsgemäße Lösung ist somit laufzeiteffizienter. Da die Schätzung der relativen Trajektorie nur einmal im System geschieht, reduziert sich die Rechenzeit. Gleichzeitig können die Bedingungen aller Koordinatensysteme erfüllt werden. Ein weiterer Vorteil besteht darin, dass die Positionsschätzungen modular aufgebaut sind und sich damit die Komplexität verringert. Im Verhältnis zu einer monolithischen Schätzung für jedes Koordinatensystem ist bei der erfindungsgemäßen Lösung die Komplexität pro Modell klein.

Erfindungsgemäß ist das erste Koordinatensystem ein relatives lokales Koordinatensystem, wohingegen das zweite Koordinatensystem ein absolutes globales Koordinatensystem ist. Basis der erfindungsgemäßen Lösung ist die Schätzung einer relativen lokalen Position, d.h. das erste Koordinatensystem ist ein relatives lokales Koordinatensystem. Dies ist vorteilhaft, da für die Schätzung der relativen lokalen Position üblicherweise eine Vielzahl von Messungen zur Verfügung steht. Die Ergebnisse der relativen lokalen Positionsschätzungen können dann für eine absolute globale Positionsschätzung genutzt werden.

Gemäß einem Aspekt der Erfindung werden die Positionsinformationen im ersten Koordinatensystem als relative Bewegung zwischen zwei Zeitpunkten oder als fortlaufende Position mit wachsender Varianz bereitgestellt. Um die relative Position im ersten Koordinatensystem für eine Positionsschätzung im zweiten Koordinatensystem verfügbar zu machen, kann diese beispielsweise als relative Bewegung zwischen zwei Zeitpunkten ausgegeben werden. Alternativ besteht die Möglichkeit, sie als fortlaufende Position mit ständig wachsender Varianz auszugeben.

Gemäß einem Aspekt der Erfindung werden Korrelationen zwischen Zuständen für zwei Zeitpunkte bestimmt. Zur korrekten Berechnung von relativen Bewegungen zwischen zwei Zeitpunkten ist es vorteilhaft, wenn zusätzlich zu einem Wissen über die Unsicherheit der Zustände selbst auch Wissen über Korrelationen zwischen den beiden Zuständen verfügbar ist. Durch das Wissen über Korrelationen kann die Genauigkeit der Positionsschätzungen erhöht werden.

Gemäß einem Aspekt der Erfindung wird für das Bestimmen von Korrelationen ein Zustandsklon eines im zweiten Koordinatensystem gemessenen Zustands im ersten Koordinatensystem generiert. Eine Möglichkeit für die Berechnung der Korrelationen besteht in der Verwendung des sogenannten "stochastic Cloning"-Verfahrens [1]. Ein weiterer Vorteil dieses Verfahrens ist, dass die Kenntnis über Zustandskorrelationen genutzt werden kann, um relative Messungen zu fusionieren, wie sie z.B. bei einem Scanmatching-Verfahren auftreten.

Gemäß einem Aspekt der Erfindung wird eine Kovarianzmatrix des Zustands zum Zustandsklon mitgeführt. Auf diese Weise kann eine korrekte Schätzung der vollen Kovarianzmatrix trotz verteilter Schätzalgorithmen sichergestellt werden.

Gemäß einem Aspekt der Erfindung werden Positionsschätzungen in zwei absoluten Koordinatensystemen für eine Plausibilisierung verwendet. Durch die Modularität der erfindungsgemäßen Lösung ist es möglich, auch mehrere absolute Koordinatensysteme einzubinden. Sind zumindest zwei verschiedene absolute Koordinatensysteme mit den zugehörigen Messungen verfügbar, besteht die Möglichkeit einer Plausibilisierung der Positionsschätzungen.

Gemäß einem Aspekt der Erfindung erfolgt eine Ausgabe von Positionsschätzungen im ersten Koordinatensystem und im zweiten Koordinatensystem an zumindest eine externe Applikation. Die Positionsschätzungen stehen so für die verschiedenen Anwendungen mit den jeweils erforderlichen Qualitäten zur Verfügung.

Vorzugsweise wird ein erfindungsgemäßes Verfahren oder eine erfindungsgemäße Vorrichtung in einem Fortbewegungsmittel eingesetzt, z.B. in einem autonomen, teilautonomen oder mit zumindest einem Assistenzsystem ausgestatteten Kraftfahrzeug. Beispielsweise kann eine erfindungsgemäße Lösung in diesem Rahmen für Systeme zum Regeln des Fahrverhaltens oder zur globalen Positionsbestimmung mittels eines Kartenabgleichs verwendet werden.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch ein Verfahren zur Positionsschätzung in zumindest zwei Koordinatensystemen;
- Fig. 2: zeigt schematisch eine erste Ausführungsform einer Vorrichtung zur Positionsschätzung in zumindest zwei Koordinatensystemen;
- Fig. 3: zeigt schematisch eine zweite Ausführungsform einer Vorrichtung zur Positionsschätzung in zumindest zwei Koordinatensystemen;
- Fig. 4: zeigt schematisch ein Fortbewegungsmittel, in dem eine erfindungsgemäße Lösung realisiert ist;
- Fig. 5: zeigt schematisch einen konventionellen Ansatz für die Positionsschätzung in einem lokalen und einem globalen Koordinatensystem;
- Fig. 6: zeigt schematisch einen erfindungsgemäßen Ansatz für die Positionsschätzung in einem lokalen und einem globalen Koordinatensystem; und
- Fig. 7: zeigt schematisch den Ablauf eines erfindungsgemäßen Verfahrens unter Verwendung von stochastic Cloning.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

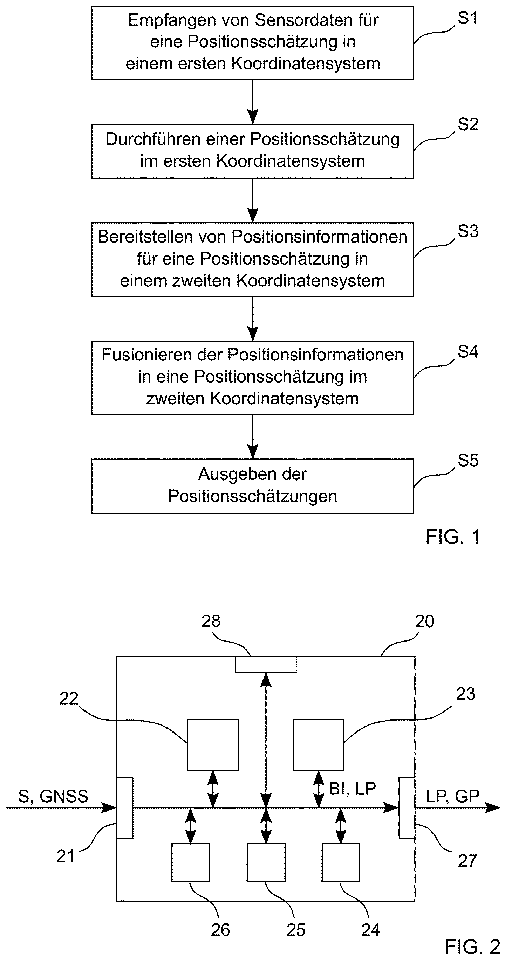

Fig. 1 zeigt schematisch ein Verfahren zur Positionsschätzung in zumindest zwei Koordinatensystemen. In einem ersten Schritt S1 werden Sensordaten für eine Positionsschätzung in einem ersten Koordinatensystem empfangen. Unter Verwendung der Sensordaten wird dann eine Positionsschätzung im ersten Koordinatensystem durchgeführt S2. Aus der Positionsschätzung resultierende Positionsinformationen aus dem ersten Koordinatensystem werden anschließend für eine Positionsschätzung in einem zweiten Koordinatensystem bereitgestellt S3, z.B. als relative Bewegung zwischen zwei Zeitpunkten oder als fortlaufende Position mit wachsender Varianz. Die bereitgestellten Positionsinformationen werden dann in eine Positionsschätzung im zweiten Koordinatensystem fusioniert S4. Die Positionsschätzungen werden schließlich an zumindest eine externe Applikation ausgegeben S5. Die Positionsschätzung im ersten Koordinatensystem kann insbesondere als fortlaufende Position mit wachsender Varianz ausgegeben werden. Bei dem ersten Koordinatensystem handelt es sich um ein relatives lokales Koordinatensystem, wohingegen das zweite Koordinatensystem ein absolutes globales Koordinatensystem ist. Zur korrekten Berechnung von relativen Bewegungen zwischen zwei Zeitpunkten werden vorzugsweise Korrelationen zwischen Zuständen für zwei Zeitpunkte bestimmt. Dazu kann ein Zustandsklon eines im zweiten Koordinatensystem gemessenen Zustands im ersten Koordinatensystem generiert werden. Vorzugsweise wird dabei eine Kovarianzmatrix des Zustands zum Zustandsklon mitgeführt.

Fig. 2 zeigt eine vereinfachte schematische Darstellung einer ersten Ausführungsform einer Vorrichtung 20 zur Positionsschätzung in zumindest zwei Koordinatensystemen, wobei es sich in diesem Beispiel um ein relatives lokales Koordinatensystem und ein absolutes globales Koordinatensystem handelt. Die Vorrichtung 20 hat einen Eingang 21, über den eine Empfangseinheit 22 Sensordaten S und Daten GNSS eines globalen Navigationssatellitensystems für Positionsschätzungen empfängt. Die Sensordaten S ermöglichen eine Positionsschätzung in einem ersten Koordinatensystem. Ein erster Positionsschätzer 23 ist eingerichtet, eine Positionsschätzung im ersten Koordinatensystem unter Verwendung der Sensordaten S durchzuführen. Der erste Positionsschätzer 23 ist zudem eingerichtet, einem zweiten Positionsschätzer 24 aus der aus der Positionsschätzung resultierende Positionsinformationen BI, LP aus dem ersten Koordinatensystem für eine Positionsschätzung im zweiten Koordinatensystem bereitzustellen, z.B. als relative Bewegung BI zwischen zwei Zeitpunkten oder als fortlaufende Position LP mit wachsender Varianz. Der zweite Positionsschätzer 24 ist darüber hinaus eingerichtet, die bereitgestellten Positionsinformationen BI, LP unter Verwendung der Daten GNSS des globalen Navigationssatellitensystems in eine Positionsschätzung GP im zweiten Koordinatensystem zu fusionieren. Die Positionsschätzungen LP, GP werden zur weiteren Verwendung über einen Ausgang 27 der Vorrichtung 20 ausgegeben an eine externe Applikation. Zur korrekten Berechnung von relativen Bewegungen zwischen zwei Zeitpunkten werden Korrelationen zwischen Zuständen für zwei Zeitpunkte bestimmt. Dazu wird ein Zustandsklon eines im zweiten Koordinatensystem gemessenen Zustands im ersten Koordinatensystem generiert.

Vorzugsweise wird dabei eine Kovarianzmatrix des Zustands zum Zustandsklon mitgeführt.

Die Empfangseinheit 22, der erste Positionsschätzer 23 und der zweite Positionsschätzer 24 können von einer Kontrolleinheit 25 gesteuert werden. Über eine Benutzerschnittstelle 28 können gegebenenfalls Einstellungen der Empfangseinheit 22, der beiden Positionsschätzer 23, 24 oder der Kontrolleinheit 25 geändert werden. Die in der Vorrichtung 20 anfallenden Daten können bei Bedarf in einem Speicher 26 der Vorrichtung 20 abgelegt werden, beispielsweise für eine spätere Auswertung oder für eine Nutzung durch die Komponenten der Vorrichtung 20. Die Empfangseinheit 22, die beiden Positionsschätzer 23, 24 sowie die Kontrolleinheit 25 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU oder einer CPU. Der Eingang 21 und der Ausgang 27 können als getrennte Schnittstellen oder als eine kombinierte bidirektionale Schnittstelle implementiert sein.

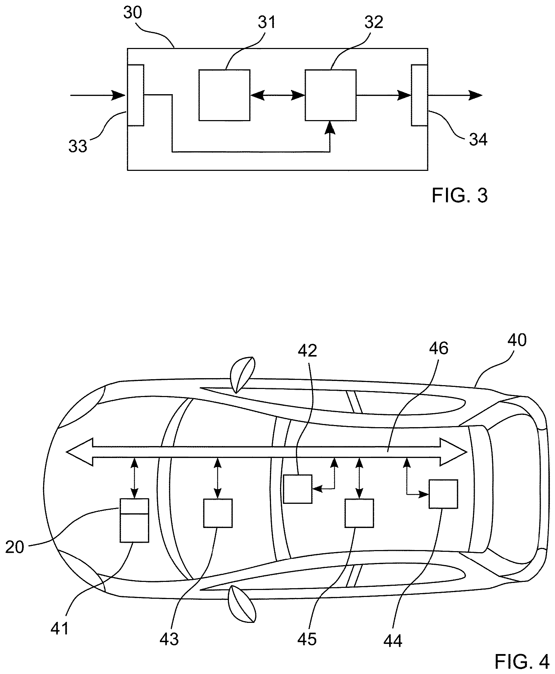

Fig. 3 zeigt eine vereinfachte schematische Darstellung einer zweiten Ausführungsform einer Vorrichtung 30 zur Positionsschätzung in zumindest zwei Koordinatensystemen. Die Vorrichtung 30 weist einen Prozessor 32 und einen Speicher 31 auf. Beispielsweise handelt es sich bei der Vorrichtung 30 um ein Steuergerät oder einen Controller. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Informationen, insbesondere von Messdaten eines oder mehrerer Sensoren. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 26, 31 der beschriebenen Vorrichtungen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

Fig. 4 zeigt schematisch ein Fortbewegungsmittel 40, in dem eine erfindungsgemäße Lösung realisiert ist. Bei dem Fortbewegungsmittel 40 handelt es sich in diesem Beispiel um ein Kraftfahrzeug, insbesondere um ein autonomes, ein teilautonomes oder ein mit Assistenzsystemen 41 ausgestattetes Kraftahrzeug. Das Kraftfahrzeug weist eine Sensorik 42 auf, mit der Messdaten erfasst werden können. Die Sensorik 42 kann insbesondere Sensoren zur Umfelderkennung umfassen, z.B. Ultraschallsensoren, Laserscanner, Radarsensoren, Lidarsensoren oder Kameras, sowie Sensoren zur Ermittlung von relativen Bewegungen, z.B. Sensoren für die Odometrie, Gyroskope oder Beschleunigungssensoren. Das Kraftfahrzeug weist zudem eine Vorrichtung 20 zur Positionsschätzung in zumindest zwei Koordinatensystemen auf, die z.B. vom Assistenzsystem 41 genutzt werden kann. Die Vorrichtung 20 kann natürlich auch in das Assistenzsystem 41 integriert sein. Weitere Bestandteile des Kraftfahrzeugs sind in diesem Beispiel ein Navigationssystem 43 sowie eine Datenübertragungseinheit 44. Mittels der Datenübertragungseinheit 44 kann eine Verbindung zu einem Backend aufgebaut werden. Zur Speicherung von Daten ist ein Speicher 45 vorhanden. Der Datenaustausch zwischen den verschiedenen Komponenten des Kraftfahrzeugs erfolgt über ein Netzwerk 46.

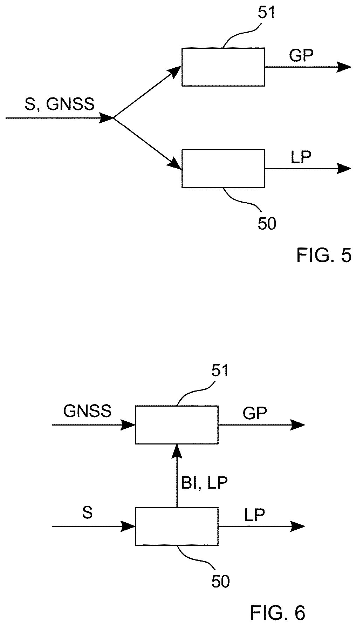

Nachfolgend sollen weitere Einzelheiten der erfindungsgemäßen Lösung anhand von Fig. 5 bis Fig. 7 erläutert werden. Dargestellt ist die Positionsbestimmung für zwei Koordinatensysteme, die beschriebene Lösung ist allerdings skalierbar auf beliebig viele Koordinatensysteme.

Fig. 5 zeigt schematisch einen konventionellen Ansatz für die Positionsschätzung in einem lokalen und einem globalen Koordinatensystem. Die Sensordaten S und die Daten GNSS eines globalen Navigationssatellitensystems werden einem lokalen Positionsschätzer 50 und einem globalen Positionsschätzer 51 zur Verfügung gestellt. Beide Positionsschätzer 50, 51 führen eine vollständige Berechnung bzw. Schätzung der Position LP, GP in ihrem jeweiligen Koordinatensystem durch. Die resultierenden Positionsschätzungen LP, GP werden dann zur weiteren Verwendung bereitgestellt.

Fig. 6 zeigt schematisch einen erfindungsgemäßen Ansatz für die Positionsschätzung in einem lokalen und einem globalen Koordinatensystem. Basis des dargestellten Systems ist die Schätzung einer relativen lokalen Position LP durch den lokalen Positionsschätzer 50 auf Grundlage der Sensordaten S. Diese relative lokale Position LP wird zur weiteren Verwendung über eine Schnittstelle an externe Applikationen ausgegeben. Aus der Positionsschätzung resultierende Positionsinformationen BI, LP werden aber auch dem globalen Positionsschätzer 51 zur Verfügung gestellt. Dies kann beispielsweise in Form einer relativen Bewegung BI zwischen zwei Zeitpunkten oder als fortlaufende Position LP mit ständig wachsender Varianz erfolgen. Der globale Positionsschätzer 51 nutzt diese Daten sowie die Daten GNSS des globalen Navigationssatellitensystems, um eine Schätzung der globalen Position GP vorzunehmen. Auch diese globale Position GP wird zur weiteren Verwendung über eine Schnittstelle an externe Applikationen ausgegeben.

Zur korrekten Berechnung von relativen Bewegungen zwischen zwei Zeitpunkten ist neben der Unsicherheit der Zustände selbst auch das Wissen über Korrelationen zwischen den beiden Zuständen von Relevanz. Die Berechnung dieser Korrelationen wird z.B. durch stochastic Cloning ermöglicht.

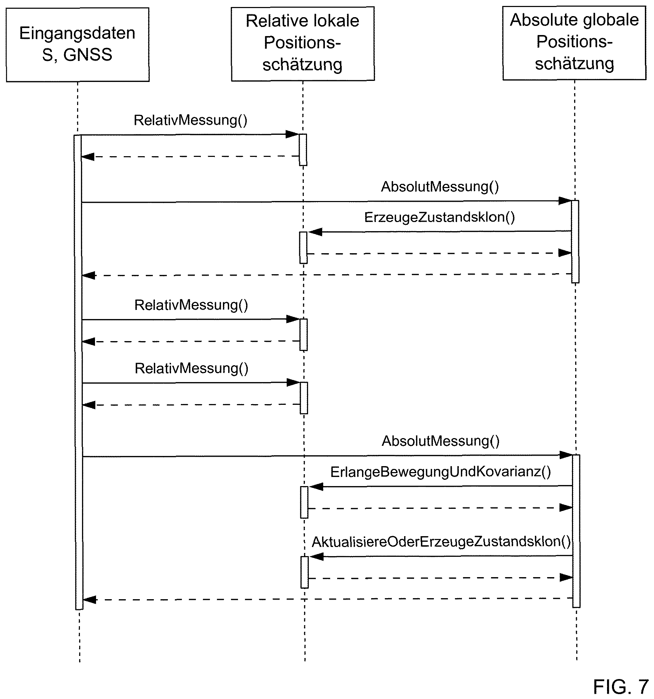

Fig. 7 zeigt schematisch den Ablauf eines erfindungsgemäßen Verfahrens unter Verwendung von stochastic Cloning. Dargestellt ist der Ablauf in Form eines vereinfachten UML Sequenzdiagramms (UML: Unified Modeling Language; vereinheitlichte Modellierungssprache). Ausgangspunkt des Verfahrens sind Eingangsdaten, die sich hier aus Sensordaten S und Daten GNSS eines globalen Navigationssatellitensystems zusammensetzen. Die Sensordaten S sind Basis für eine Schätzung der relativen lokalen Position, die Daten GNSS des Navigationssatellitensystems sind Basis für eine Schätzung der absoluten globalen Position. Zusätzlich zu den Messungen (RelativMessung()) im lokalen Koordinatensystem wird zum Zeitpunkt einer Messung (AbsolutMessung()) im absoluten Koordinatensystem im Schätzmodell der relativen Trajektorie die Erzeugung eines Zustandsklons ausgelöst (ErzeugeZustandsklon()). Bis zum Zeitpunkt der nächsten Messung im absoluten Koordinatensystem sorgt nun das stochastic Cloning für das korrekte Mitführen der vollen Kovarianzmatrix inklusive der Korrelation vom aktuellen Zustand zum Zustandsklon. Die mitgeführte Kovarianzmatrix sowie die relative Bewegung des Zustandsklons können dann für das Schätzmodell der absoluten Trajektorie verwendet werden (ErlangeBewegungUndKovarianz()). Zum Zeitpunkt der nächsten Messung im absoluten Koordinatensystem wird im Schätzmodell der relativen Trajektorie die Erzeugung eines neuen Zustandsklons oder die Aktualisierung des bereits existierenden Zustandsklons ausgelöst (ErzeugeOderAktualisiereZustandsklon()).

### Referenzen

[1] S.I. Roumeliotis et al.: "Stochastic cloning: a generalized framework for processing relative state measurements", Proceedings of the 2002 IEEE International Conference on Robotics and Automation (ICRA), S. 1788-1795.

## Patentansprüche

1. Verfahren zur Positionsschätzung in zumindest zwei Koordinatensystemen, mit den Schritten:
- Empfangen (S1) von Sensordaten (S) für eine Positionsschätzung in einem relativen lokalen ersten Koordinatensystem; und
- Durchführen einer Positionsschätzung (S2) im ersten Koordinatensystem unter Verwendung der Sensordaten (S);
- Bereitstellen (S3) von aus der Positionsschätzung (S2) resultierenden Positionsinformationen (BI, LP) aus dem ersten Koordinatensystem für eine Positionsschätzung in einem absoluten globalen zweiten Koordinatensystem;
- Fusionieren (S4) von Daten eines globalen Navigationssatellitensystems sowie der bereitgestellten Positionsinformationen (BI, LP) in eine Positionsschätzung im zweiten Koordinatensystem;
- Bestimmen von Korrelationen zwischen Zuständen für zwei Zeitpunkte, wobei für das Bestimmen der Korrelationen ein Zustandsklon eines im zweiten Koordinatensystem gemessenen Zustands im ersten Koordinatensystem generiert wird; und
- Ausgeben von Positionsschätzungen (LP, GP) im ersten Koordinatensystem und im zweiten Koordinatensystem an zumindest eine externe Applikation.

2. Verfahren gemäß Anspruch 1, wobei die Positionsinformationen im ersten Koordinatensystem als relative Bewegung (BI) zwischen zwei Zeitpunkten oder als fortlaufende Position (LP) mit wachsender Varianz bereitgestellt werden (S3).

3. Verfahren gemäß Anspruch 1 oder 2, wobei eine Kovarianzmatrix des Zustands zum Zustandsklon mitgeführt wird.

4. Verfahren gemäß einem der vorherigen Ansprüche, wobei Positionsschätzungen (GP) in zwei absoluten Koordinatensystemen für eine Plausibilisierung verwendet werden.

5. Computerprogramm mit Instruktionen, die bei Ausführung durch einen Computer den Computer zur Ausführung der Schritte eines Verfahrens gemäß einem der Ansprüche 1 bis 4 zur Positionsschätzung in zumindest zwei Koordinatensystemen veranlassen.

6. Vorrichtung (20) zur Positionsschätzung in zumindest zwei Koordinatensystemen, mit:
- einer Empfangseinheit (22) zum Empfangen (S1) von Sensordaten (S) für eine Positionsschätzung in einem relativen lokalen ersten Koordinatensystem;
- einem ersten Positionsschätzer (23) zum Durchführen einer Positionsschätzung (S2) im ersten Koordinatensystem unter Verwendung der Sensordaten (S) und zum Bereitstellen (S3) von aus der Positionsschätzung (S2) resultierenden Positionsinformationen (BI, LP) aus dem ersten Koordinatensystem für eine Positionsschätzung in einem absoluten globalen zweiten Koordinatensystem;
- einem zweiten Positionsschätzer (24) zum Fusionieren (S4) von Daten eines globalen Navigationssatellitensystems sowie der bereitgestellten Positionsinformationen (BI, LP) in eine Positionsschätzung im zweiten Koordinatensystem;
wobei Korrelationen zwischen Zuständen für zwei Zeitpunkte bestimmt werden, wobei für das Bestimmen der Korrelationen ein Zustandsklon eines im zweiten Koordinatensystem gemessenen Zustands im ersten Koordinatensystem generiert wird; und
- einem Ausgang (27) zum Ausgeben von Positionsschätzungen (LP, GP) im ersten Koordinatensystem und im zweiten Koordinatensystem an zumindest eine externe Applikation.

## Claims

1. Method for estimating a position in at least two coordinate systems, having the steps of:
- receiving (S1) sensor data (S) for a position estimation in a relative local first coordinate system; and
- performing a position estimation (S2) in the first coordinate system using the sensor data (S);
- providing (S3) position information (BI, LP) resulting from the position estimation (S2) from the first coordinate system for a position estimation in an absolute global second coordinate system;
- fusing (S4) data from a global navigation satellite system and the position information (BI, LP) provided to form a position estimation in the second coordinate system;
- determining correlations between states for two points in time, wherein a state clone of a state measured in the second coordinate system is generated in the first coordinate system for determining the correlations; and
- outputting position estimations (LP, GP) in the first coordinate system and in the second coordinate system to at least one external application.

2. Method according to Claim 1, wherein the position information in the first coordinate system is provided (S3) as a relative movement (BI) between two points in time or as a continuous position (LP) with increasing variance.

3. Method according to Claim 1 or 2, wherein a covariance matrix of the state is carried to the state clone.

4. Method according to one of the preceding claims, wherein position estimations (GP) in two absolute coordinate systems are used for a plausibility check.

5. Computer program having instructions which, when executed by a computer, cause the computer to carry out the steps of a method according to one of Claims 1 to 4 for estimating a position in at least two coordinate systems.

6. Device (20) for estimating a position in at least two coordinate systems, having:
- a receiving unit (22) for receiving (S1) sensor data (S) for a position estimation in a relative local first coordinate system;
- a first position estimator (23) for performing a position estimation (S2) in the first coordinate system using the sensor data (S) and for providing (S3) position information (BI, LP) resulting from the position estimation (S2) from the first coordinate system for a position estimation in an absolute global second coordinate system;
- a second position estimator (24) for fusing (S4) data from a global navigation satellite system and the position information (BI, LP) provided to form a position estimation in the second coordinate system;
wherein correlations between states are determined for two points in time, wherein a state clone of a state measured in the second coordinate system is generated in the first coordinate system for determining the correlations; and
- an output (27) for outputting position estimations (LP, GP) in the first coordinate system and in the second coordinate system to at least one external application.

## Revendications

1. Procédé d'estimation de position dans au moins deux systèmes de coordonnées, comprenant les étapes suivantes :
- réception (S1) de données de capteur (S) pour une estimation de position dans un premier système de coordonnées local relatif ; et
- réalisation d'une estimation de position (S2) dans le premier système de coordonnées en utilisant les données de capteur (S) ;
- fourniture (S3) des informations de position (BI, LP) résultant de l'estimation de position (S2) à partir du premier système de coordonnées pour une estimation de position dans un deuxième système de coordonnées global absolu ;
- fusion (S4) des données d'un système de satellites de navigation global ainsi que des informations de position (BI, LP) fournies en une estimation de position dans le deuxième système de coordonnées ;
- détermination des corrélations entre des états pour deux instants, un clone d'état d'un état mesuré dans le deuxième système de coordonnées étant généré dans le premier système de coordonnées pour la détermination des corrélations ; et
- délivrance des estimations de position (LP, GP) dans le premier système de coordonnées et dans le deuxième système de coordonnées à au moins une application externe.

2. Procédé selon la revendication 1, les informations de position dans le premier système de coordonnées étant fournies (S3) sous la forme d'un mouvement relatif (BI) entre deux instants ou d'une position continue (LP) avec une variance croissante.

3. Procédé selon la revendication 1 ou 2, une matrice de covariance de l'état accompagnant le clone d'état.

4. Procédé selon l'une des revendications précédentes, des estimations de position (GP) dans deux systèmes de coordonnées absolues étant utilisées pour un contrôle de plausibilité.

5. Programme informatique comprenant des instructions qui, lorsqu'elles sont exécutées par un ordinateur, amènent l'ordinateur à exécuter les étapes d'un procédé selon l'une des revendications 1 à 4 pour estimer la position dans au moins deux systèmes de coordonnées.

6. Dispositif (20) d'estimation de position dans au moins deux systèmes de coordonnées, comprenant :
- une unité de réception (22) destinée à la réception (S1) de données de capteur (S) pour une estimation de position dans un premier système de coordonnées local relatif ;
- un premier estimateur de position (23) destiné à la réalisation d'une estimation de position (S2) dans le premier système de coordonnées en utilisant les données de capteur (S) et à la fourniture (S3) des informations de position (BI, LP) résultant de l'estimation de position (S2) à partir du premier système de coordonnées pour une estimation de position dans un deuxième système de coordonnées global absolu ;
- un deuxième estimateur de position (24) destiné à la fusion (S4) des données d'un système de satellites de navigation global ainsi que des informations de position (BI, LP) fournies en une estimation de position dans le deuxième système de coordonnées ;
des corrélations entre des états pour deux instants étant déterminées, un clone d'état d'un état mesuré dans le deuxième système de coordonnées étant généré dans le premier système de coordonnées pour la détermination des corrélations ; et
- une sortie (27) destinée à la délivrance des estimations de position (LP, GP) dans le premier système de coordonnées et dans le deuxième système de coordonnées à au moins une application externe.
